(19) Europäisches Patentamt
European Patent Office
Office européen des brevets

(11) **EP 1 998 147 B1**

(12) **EUROPÄISCHE PATENTSCHRIFT**

(45) Veröffentlichungstag und Bekanntmachung des Hinweises auf die Patenterteilung:
**28.02.2018   Patentblatt 2018/09**

(51) Int Cl.:
***G01D 5/14*** *(2006.01)*

(21) Anmeldenummer: **08103308.6**

(22) Anmeldetag: **02.04.2008**

(54) **Messeinrichtung zur berührungslosen Erfassung eines Drehwinkels mit radial polarisiertem Magneten**

Measuring device for contactless calculation of a rotation angle with radially polarised magnets

Dispositif de mesure destiné à la détermination sans contact d'un angle de rotation à l'aide d'aimants radiaux polarisés

(84) Benannte Vertragsstaaten:
**CZ DE FR IT**

(30) Priorität: **29.05.2007   DE 102007024867**

(43) Veröffentlichungstag der Anmeldung:
**03.12.2008   Patentblatt 2008/49**

(73) Patentinhaber: **ROBERT BOSCH GMBH**
**70442 Stuttgart (DE)**

(72) Erfinder:
• **Bauer, Bernhard**
  **71566 Althuette (DE)**
• **Zeh, Matthias**
  **71732 Tamm (DE)**
• **Koeberle, Bernd**
  **70736 Fellbach (DE)**
• **Klotzbuecher, Thomas**
  **73635 Rudersberg (DE)**

(56) Entgegenhaltungen:
| | |
|---|---|
| **EP-A2- 1 182 461** | **WO-A1-2007/057563** |
| **DE-A1- 19 753 776** | **JP-A- 2003 084 007** |
| **JP-A- 2006 242 915** | |

## Beschreibung

Stand der Technik

Die Erfindung betrifft eine Messeinrichtung zur berührungslosen Erfassung eines Drehwinkels mit einem Rotor, auf dem ein Magnet mit radialem Abstand zu einer Drehachse angeordnet ist, und mit einem magnetfeldempfindlichen Element zur Erzeugung eines Messsignals, wobei das magnetfeldempfindliche Element und der Magnet so angeordnet sind, dass sich während der Drehbewegung des Rotors der Magnet auf einer Kreisbahn bewegt und das magnetfeldempfindliche Element in Bezug zur Kreisbahn des Magneten tangential angeordnet ist, gemäß dem Oberbegriff von Anspruch 1.

Eine solche Messeinrichtung ist in verschiedenen Systemen des Fahrzeugbereichs verwendbar, in denen Drehwinkel gemessen werden müssen, wie beispielsweise in einem Drosselklappengeber, in einem Gaspedalwertgeber in einem Pedalmodul, in einem Karosserieeinfederungsgeber oder in einem Winkelaufnehmer eines Scheibenwischerantriebs.

Eine gattungsgemäße Messeinrichtung ist aus der DE 197 53 776 A1 bekannt und besteht aus einer aus weichmagnetischem Material bestehenden Trägerplatte, die als Rotor um eine Drehachse dreht. In einer Ebene parallel zur Trägerplatte sind zwei durch einen Schlitz getrennte Segmente aus weichmagnetischem Material angeordnet, in welchem das magnetfeldempfindliche Element angeordnet ist. Eines dieser Segmente trägt ein Rückflussteil aus weichmagnetischem Werkstoff, um zusammen mit den Segmenten den Magnetfluss zu führen, der von einem auf der Trägerplatte angeordneten Magneten erzeugt wird. Der Magnet ist in Richtung der Drehachse, d.h. axial polarisiert.

Als magnetfeldempfindliches Element kommen bei solchen Messeinrichtungen vor allem Hall-Elemente zum Einsatz. Der Halleffekt gehört zu den galvanomagnetischen Effekten und wird vor allem mittels dünner Halbleiterplättchen ausgewertet. Wird ein solches stromdurchflossenes Halbleiterplättchen senkrecht von einem Magnetfeld durchsetzt, kann quer zur Stromrichtung eine zum Magnetfeld proportionale Spannung abgegriffen werden. Im Falle von Silizium als Grundmaterial kann man gleichzeitig eine Signalverarbeitungselektronik auf dem Halbleiterplättchen integrieren, wodurch solche Sensoren sehr kostengünstig werden. Solche integrierten Hall-IC's eignen sich vorwiegend für die Messung von Winkeln und Wegen, indem sie die Änderung der Feldrichtung des mit einem bewegten Rotor verbundenen Magneten erfassen.

Ein Sensor mit solchen Hall-Elementen ist beispielsweise aus der EP 1 182 461 A2 bekannt, wobei ein Magnetfeldkonzentrator in seinem Umfeld den Verlauf der Feldlinien des vom Magneten erzeugten Magnetfelds verändert und bewirkt, dass die Feldlinien, welche bei Abwesenheit des Magnetfeldkonzentrators parallel zur Oberfläche der Hallelemente verlaufen würden, die Hall-Elemente annähernd senkrecht zu ihrer Oberfläche durchdringen. Dabei bilden einander diametral gegenüberliegende Hall-Elemente je ein Paar zur Erzeugung eines Ausgangssignals, dessen Stärke von der Richtung des Magnetfelds abhängt, welches wiederum durch die momentane Lage des Magneten definiert wird, der beispielsweise mit einem Läufer eines Elektromotors drehfest verbunden ist, so dass aufgrund des Ausgangssignals der Drehwinkel des Läufers bestimmt werden kann.

Solche Hall-Elemente benötigen eine ausreichende Magnetfeldstärke, damit ihre Auflösung ausreichend groß ist. Ebenso wirkt sich eine große Magnetfeldstärke günstig gegenüber Fremdfeldern und gegenüber der unvermeidbaren Alterung aus. Darüber hinaus benötigen diese Sensoren einen homogenen, magnetischen Winkelbereich, damit Neuteiltoleranzen bzw. Toleranzen, welche im Betrieb entstehen, wie beispielsweise Drehachsverlagerungen aufgrund von Verschleiß oder mechanischem Spiel ausgeglichen werden können. Deshalb bauen die in solchen Anwendungen verwendeten Magneten relativ groß.

Manche Anwendungen, beispielsweise als Drehwinkelgeber in Fahrpedalmoduln, haben einen Verstellbereich von 10 bis 30 Grad Winkeldrehung. Bei solchen Anwendungen verursachen bereits kleine Fehler im Bereich von 0,1 Grad bis 0,3 Grad der Elektronik relativ große Spannungsänderungen im Ausgangssignal.

Offenbarung der Erfindung

Die Erfindung basiert auf dem Gedanken, den Magnet in einer in Bezug zur Drehachse senkrecht zur Radialrichtung angeordneten Ebene radial zu magnetisieren oder zu polarisieren. Unter "radial magnetisiert oder polarisiert" soll eine Magnetisierung des Magneten verstanden werden, durch welche in der genannten Ebene gesehen Nord- und Südpol des Magneten nebeneinander liegen und sich magnetische Feldlinien ergeben, welche sich ausgehend von einem in der genannten Ebene gelegenen, gedachten Zentrum senkrecht zu dieser Ebene fächerförmig aufweiten.

Dadurch wird der magnetisch wirksame Raum der Magnetfeldlinien größer, so dass nach Art einer magnetischen Übersetzung der vom magnetfeldempfindlichen Element erfasste Drehwinkel um einen bestimmten Faktor vergrößert wird, was den Vorteil mit sich bringt, dass Drehwinkeländerungen des Rotors mit einer höheren Genauigkeit erfasst werden und kleine Winkelfehler der Sensorik einen nur geringen Einfluss auf das Messergebnis haben.

Mit anderen Worten wird der Betätigungswinkel der Drehbewegung des Rotors gegenüber dem magnetfeldempfindlichen Element durch einen Permanentmagneten, welcher in einer in Bezug zur Drehachse senkrecht zur Radialrichtung angeordneten Ebene radial magnetisiert oder polarisiert ist, für das magnetfeldempfindliche Element magnetisch übersetzt.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform ist der Magnet an einem radial äußeren Umfang des Rotors angeordnet. Dann kann das magnetfeldempfindliche Element in Bezug zur Kreisbahn des Magneten um ein Stück weit nach radial außen versetzt angeordnet sein, wobei der Abstand so klein zu wählen ist, dass das magnetfeldempfindliche Element beim Passieren des Magneten vom Magnetfeld vollständig erfasst werden kann. Hierzu sind das magnetfeldempfindliche Element und der Magnet bestenfalls so anzuordnen, dass während der Kreisbewegung des Magneten Drehlagen existieren, in welchen sich das magnetfeldempfindliche Element und der Magnet zumindest teilweise überdecken.

Besonders bevorzugt ist der Magnet als Kreissegment oder Teil eines Kreisrings ausgebildet, welches in der in Bezug zur Drehachse senkrecht zur Radialrichtung angeordneten Ebene angeordnet ist. Alternativ könnte der Magnet eine beliebige Form aufweisen und insbesondere rechteckförmig ausgebildet sein.

Der genaue Aufbau der Messeinrichtung wird anhand der folgenden Beschreibung eines Ausführungsbeispiels klar.

Zeichnung

Ein Ausführungsbeispiel der Erfindung sind in der Zeichnung dargestellt und in der nachfolgenden Beschreibung näher erläutert. In der Zeichnung zeigt

Fig. 1    eine schematische Darstellung einer Messeinrichtung gemäß einer bevorzugten Ausführungsform der Erfindung;

Fig.2    eine perspektivische Darstellung eines radial magnetisierten oder polarisierten Magneten;

Fig.3    eine perspektivische Darstellung eines als Kreissegment oder Teil eines Kreisrings ausgebildeten Magneten, wie er in der Messeinrichtung von Fig.1 verwendet wird;

Fig.4    eine Ansicht entlang der Linie IV-IV von Fig.1;

Fig.5    eine schematische Darstellung der Messeinrichtung von Fig.1 im Betrieb;

Fig.6    eine Draufsicht auf die Messeinrichtung von Fig.5 entlang der Linie VI-VI.

Beschreibung des Ausführungsbeispiels

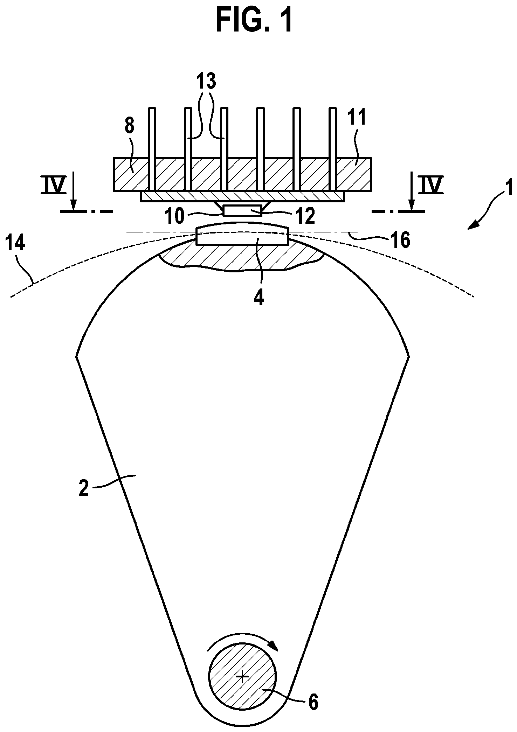

Das in Fig. 1 dargestellte bevorzugte Ausführungsbeispiel einer Messeinrichtung 1 zur berührungslosen Erfassung eines Drehwinkels wird beispielsweise zur Messung des Betätigungswinkels eines aus Maßstabsgründen nicht gezeigten elektronischen Fahrpedals eines Fahrpedalmoduls verwendet. Darüber hinaus ist eine solche Messeinrichtung 1 in verschiedenen Systemen verwendbar, in denen Drehwinkel gemessen werden müssen, im Fahrzeugbereich beispielsweise in einem Drosselklappengeber, in einem Gaspedalwertgeber in einem Pedalmodul, in einem Karosserieeinfederungsgeber oder in einem Winkelaufnehmer eines Scheibenwischerantriebs.

Die Messeinrichtung 1 umfasst einen Rotor 2, beispielsweise ein Formteil aus Kunststoff, das mit einem gegenüber einem Lagerbock drehbar gelagerten Fahrpedal drehfest verbunden ist, auf dem ein Magnet 4 mir radialem Abstand zu einer Drehachse 6 angeordnet ist. Bei dem Magneten 4 handelt es sich vorzugsweise um einen Permanentmagneten.

Weiterhin ist ein Stator 8 vorhanden, hier beispielsweise in Form des Lagerbocks des Fahrpedals, welcher wenigstens ein magnetfeldempfindliches Element 10 zur Erzeugung eines Messsignals trägt, wie beispielsweise eine Feldplatte, einen Magnettransistor, eine Spule, ein magnetoresistives Element oder ein Hall-Element. Mittels eines Steckers 11 mit Pins 13 ist das wenigstens eine magnetfeldempfindliche Element 10 mit einem hier nicht gezeigten Gegenstecker verbindbar, um die Messsignale weiterzuleiten.

Gemäß einer weiteren, hier nicht dargestellten Ausführungsform könnte auch der Magnet 4 auf dem Stator 8 und das magnetfeldempfindliche Element 10 auf dem Rotor 2 angeordnet sein. Die Anordnung des Magneten 4 und des magnetfeldempfindlichen Elements 10 auf dem Rotor 2 oder dem Stator 8 findet beispielsweise abhängig von dem Aufwand für die Stromversorgung des magnetfeldempfindlichen Elements 10 ab.

Im vorliegenden Fall werden bevorzugt ein oder mehrere verschaltete Hall-Elemente 10 verwendet, die vorzugsweise in einem Halbleiterchip 12 aus Silizium integriert sind, in welchem eine Signalverarbeitungselektronik realisiert ist. Der Halbleiterchip 12 beinhaltet wenigstens einen Magnetfeldkonzentrator. Die Hall-Elemente 10 sind empfindlich auf die Komponente des Magnetfelds B, die senkrecht auf ihre Oberfläche auftrifft, wie eingangs bereits diskutiert wurde. Der Magnetfeldkonzentrator verändert in seinem Umfeld den Verlauf der Feldlinien des vom Permanentmagneten 4 erzeugten Magnetfelds B und bewirkt, dass die Feldlinien, welche bei Abwesenheit des Magnetfeldkonzentrators parallel zur Oberfläche der Hall-Elemente 10 verlaufen würden, die Hall-Elemente 10 annähernd senkrecht zu ihrer Oberfläche durchdringen, also in einer Richtung, in welcher diese empfindlich sind.

Wie aus Fig.1 hervorgeht, sind die Hall-Elemente 10 und der Permanentmagnet 4 so angeordnet, dass sich während der Drehbewegung des Formteils 2 der Permanentmagnet 4 auf einer Kreisbahn 14 bewegt und die Hall-Elemente 10 bzw. der Halbleiterchip 12 in Bezug zur Kreisbahn 14 des Permanentmagneten 4 tangential angeordnet sind, wobei die Hall-Elemente 10 während der Kreisbewegung des Permanentmagneten 4 die Änderung der Magnetfeldrichtung messen.

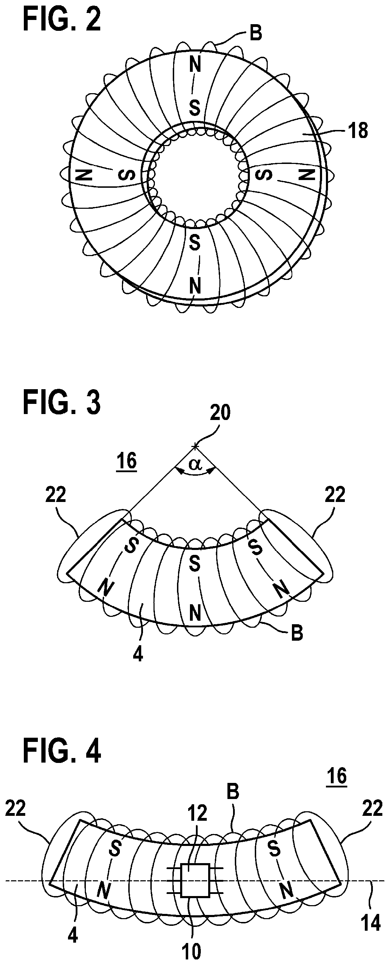

Gemäß der bevorzugten Ausführungsform ist der Permanentmagnet 4 an einem radial äußeren Umfang des Formteils 2 angeordnet, wobei die stationären Hall-Elemente 10 in Bezug zur Kreisbahn 14 des Permanentmagneten 4 um ein Stück weit nach radial außen versetzt angeordnet sind. Dabei ist der radiale Abstand zwischen den Hall-Elementen 10 und dem Permanentmagneten 4 so klein zu wählen, dass die Hall-Elemente 10 beim Passieren des Permanentmagneten 4 vom Magnetfeld B vollständig erfasst werden können. Hierzu sind die Hall-Elemente 10 und der Permanentmagnet 4 bestenfalls so anzuordnen, dass während der Kreisbewegung des Permanentmagneten 4 Drehlagen existieren, in welchen sich die Hall-Elemente 10 und der Permanentmagnet 4 zumindest teilweise überdecken, wie insbesondere Fig.4 zeigt.

Dann erfassen die Hall-Elemente 10 die von der Drehlage abhängige Feldstärke bzw. Feldrichtung des Magnetfelds B des mit dem Fahrpedal drehfest verbundenen Permanentmagneten 4, so dass aufgrund des Ausgangssignals der Hall-Elemente 10 der momentane Drehwinkel β des Permanentmagneten 4 mit Hilfe der Signalverarbeitungselektronik bestimmt werden kann. Da der Permanentmagnet 4 drehfest mit dem Fahrpedal verbunden ist, kann aus dem Ausgangssignal der Hall-Elemente 10 dessen Drehwinkelstellung errechnet werden. Die Funktionsweise und Verschaltung solcher Hall-Elemente 10 mit Magnetfeldkonzentrator ist beispielsweise in der EP 1 182 461 A2 hinreichend beschrieben, weshalb hier nicht weiter darauf eingegangen werden soll.

Der Permanentmagnet ist vorzugsweise als Kreissegment 4 oder Teil eines Kreisrings ausgebildet, wie Fig.3 zeigt. Das Kreissegment 4 ist in einer in Bezug zur Drehachse 6 senkrecht zur Radialrichtung angeordneten Ebene 16 angeordnet, genauer an einer radial äußeren Stirnfläche des Formteils. Alternativ könnte der Permanentmagnet 4 eine beliebige Form aufweisen und insbesondere rechteckförmig ausgebildet sein.

Wesentlich ist, dass der Permanentmagnet 4 in der in Bezug zur Drehachse 6 senkrecht zur Radialrichtung angeordneten Ebene 16 radial magnetisiert oder polarisiert ist. Dies bedeutet, dass ein Kreisring 18 gemäß Fig.2, aus welchem das Kreissegment 4 stammt, das hier den Permanentmagneten bildet, durch eine Spule derart magnetisiert bzw. polarisiert wird, dass ein radial innerer Ringabschnitt beispielsweise den Südpol S und ein radial äußerer Ringabschnitt den Nordpol N des Permanentmagneten 4 darstellt. Selbstverständlich könnte die Magnetisierung bzw. die Polarisierung des Permanentmagneten 4 auch derart erfolgen, dass der Südpol S am radial äußeren Ringabschnitt und der Nordpol N am radial inneren Ringabschnitt ausgebildet wird.

Unter "radial magnetisiert oder polarisiert" soll folglich eine Magnetisierung des Permanentmagneten 4 verstanden werden, durch welche in der genannten Ebene gesehen Nord- und Südpol N, S des Permanentmagneten 4 nebeneinander liegen und sich magnetische Feldlinien ergeben, welche sich ausgehend von einem in der genannten Ebene 16 gelegenen, gedachten Zentrum 20 als Verlängerung der Magnetfeldlinien senkrecht zu dieser Ebene 16 fächerförmig aufweiten, wie insbesondere Fig.2 und Fig.3 veranschaulichen, in welchen die Aufweitung in Richtung des Nordpols N erfolgt. Zwischen den äußeren Magnetfeldlinien 22 des Magnetfelds B des Kreissegments 4 bildet sich dann der magnetische Winkel α aus.

Anschaulich resultiert die trichter- oder fächerförmige Aufweitung des Magnetfelds B ausgehend von dem außerhalb des Kreissegments 4 gelegenen gedachten Zentrums 20 darin, dass die Magnetfeldlinien, insbesondere die äußeren Magnetfeldlinien 22 gegenüber der Kreisbahn 14 des Permanentmagneten 4 schrägwinklig angeordnet sind (Fig.4). Dadurch werden die Hall-Elemente 10 beim Passieren des Permanentmagneten 4 von dem schräg vorstehenden Teil dieser äußeren Magnetfeldlinien 22 zuerst erfasst, was bereits Ausgangssignale in den Hall-Elementen 10 erzeugt. Gegenüber einer Lösung, bei welcher die Magnetfeldlinien senkrecht zur Kreisbahn 14 des Permanentmagneten 4 ausgerichtet wären, ergibt sich folglich ein größerer magnetisch wirksamer Raum der Magnetfeldlinien, so dass nach Art einer magnetischen Übersetzung der von den Hall-Elementen 10 erfasste Drehwinkel β um einen bestimmten Faktor vergrößert wird.

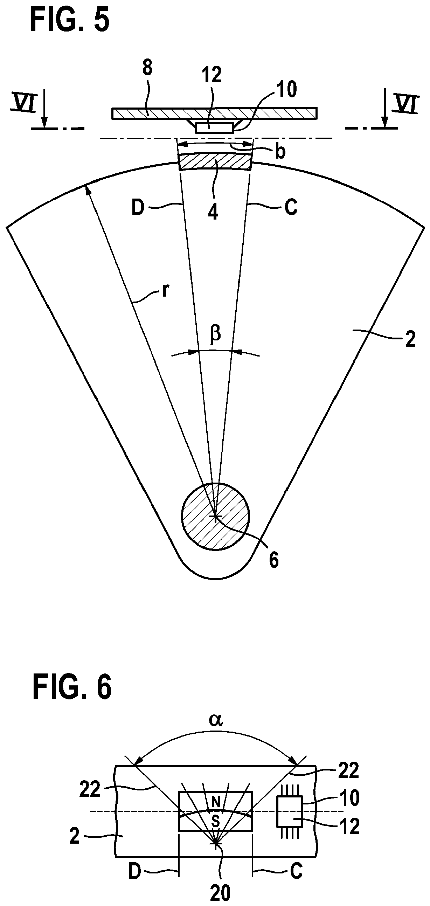

Wenn beispielsweise der Winkel β der Drehbewegung des Formteils 2 gegenüber den Hall-Elementen 10 zehn Grad und der Radius r zwischen dem Kreissegment 4 und der Drehachse 2 vierzig Millimeter beträgt, so errechnet sich die Länge b des Bogens zwischen den Punkten C und D in Fig.5 wie folgt:

$$b = \frac{\beta}{180} \cdot r \cdot \pi = 7mm$$

Wenn der magnetische Winkel α = 90 Grad beträgt, so ist die Übersetzung 9 : 1, d.h. die Hall-Elemente 10 erfassen zwischen den Punkten C und D einen magnetischen Winkel α von 90 Grad bei einer Drehung des Formteils 2 von nur zehn Grad, wie aus Fig.5 und Fig.6 anschaulich hervorgeht.

Mit anderen Worten wird der Betätigungswinkel β der Drehbewegung des Formteils 2 gegenüber den Hall-Elementen 10 durch einen Permanentmagneten 4, welcher in einer in Bezug zur Drehachse 6 senkrecht zur Radialrichtung angeordneten Ebene 16 radial magnetisiert oder polarisiert ist, für die Hall-Elemente 10 magnetisch übersetzt.

**Patentansprüche**

**1.** Messeinrichtung (1) zur berührungslosen Erfassung eines Drehwinkels (β) mit einem ersten Körper (2), auf dem ein Magnet (4) mit radialem Abstand (r) zu einer Drehachse (6) angeordnet ist und mit wenigstens einem zweiten Körper (8) mit einem magnetfeldempfindlichen Element (10) zur Erzeugung eines Messsignals, wobei bei einer Relativdrehbewegung zwischen dem ersten Körper (2) und dem zweiten Körper (8) das magnetfeldempfindliche Element (10) und der Magnet (4) tangential in Bezug zu einer Kreisbahn (14) der Relativdrehbewegung angeordnet sind, **dadurch gekennzeichnet, dass** der Magnet (4) derart radial magnetisiert oder polarisiert ist, dass Nord- und Südpol (N,S) in einer senkrecht zu einer auf die Drehachse (6) bezogenen Radialrichtung angeordneten Ebene (16) nebeneinander liegen und sich magnetische Feldlinien ergeben, welche sich ausgehend von einem in der Ebene (16) gelegenen, gedachten Zentrum (20) senkrecht zu der Ebene (16) fächerförmig aufweiten.

2. Messeinrichtung nach Anspruch 1, **dadurch gekennzeichnet, dass** der erste Körper (2) ein Rotor und der zweite Körper (8) ein Stator ist.

3. Messeinrichtung nach Anspruch 2, **dadurch gekennzeichnet, dass** der Magnet (4) an einem radial äußeren Umfang des Rotors (2) angeordnet ist.

4. Messeinrichtung nach Anspruch 3, **dadurch gekennzeichnet, dass** das magnetfeldempfindliche Element (10) in Bezug zur Kreisbahn (14) des Magneten (4) um ein Stück weit nach radial außen versetzt geordnet ist.

5. Messeinrichtung nach wenigstens einem der vorhergehenden Ansprüche, **dadurch gekennzeichnet, dass** der Magnet (4) als Kreissegment oder Teil eines Kreisrings ausgebildet ist.

6. Messeinrichtung nach wenigstens einem der Ansprüche 1 bis 4, **dadurch gekennzeichnet, dass** der Magnet (4) rechteckförmig ausgebildet ist.

7. Messeinrichtung nach wenigstens einem der vorhergehenden Ansprüche, **dadurch gekennzeichnet, dass** während der Relativdrehbewegung zwischen dem ersten Körper (2) und dem zweiten Körper (8) Drehlagen existieren, in welchen sich das magnetfeldempfindliche Element (10) und der Magnet (4) zumindest teilweise überdecken.

## Claims

1. Measuring device (1) for contactless calculation of a rotation angle (β), comprising a first body (2), on which a magnet (4) is arranged at a radial distance (r) from an axis of rotation (6), and comprising at least one second body (8) having a magnetic-field-sensitive element (10) for generating a measuring signal, where, during a relative rotational movement between the first body (2) and the second body (8), the magnetic-field-sensitive element (10) and the magnet (4) are arranged tangentially in relation to a circular path (14) of the relative rotational movement, **characterized in that** the magnet (4) is magnetized or polarized radially in such a way that north and south pole (N,S) are located beside each other in a plane (16) arranged at right angles to a radial direction referred to the axis of rotation (6) and the result are magnetic field lines which, starting from an imaginary centre (20) placed in the plane (16), widen out in the form of a fan at right angles to the plane (16).

2. Measuring device according to Claim 1, **characterized in that** the first body (2) is a rotor and the second body (8) is a stator.

3. Measuring device according to Claim 2, **characterized in that** the magnet (4) is arranged on a radially outer circumference of the rotor (2).

4. Measuring device according to Claim 3, **characterized in that** the magnetic-field-sensitive element (10) is arranged to be offset a little further radially outwards in relation to the circular path (14) of the magnet (4).

5. Measuring device according to at least one of the preceding claims, **characterized in that** the magnet (4) is formed as a circular segment or part of a circular ring.

6. Measuring device according to at least one of Claims 1 to 4, **characterized in that** the magnet (4) is formed in the shape of a rectangle.

7. Measuring device according to at least one of the preceding claims, **characterized in that** during the relative rotational movement between the first body (2) and the second body (8), there exist rotary positions in which the magnetic-field-sensitive element (10) and the magnet (4) at least partly overlap.

## Revendications

1. Dispositif de mesure (1) destiné à l'acquisition sans contact d'un angle de rotation (β) comprenant un premier corps (2), sur lequel est disposé un aimant (4) avec un écart radial (r) donné par rapport à un axe de rotation (6), et comprenant au moins un deuxième corps (8) pourvu d'un élément sensible aux champs magnétiques (10) destiné à générer un signal de mesure, l'élément sensible aux champs magnétiques (10) et l'aimant (4), lors d'un mouvement de rotation relative entre le premier corps (2) et le deuxième corps (8), étant disposés de manière tangentielle par rapport à une trajectoire circulaire (14) du mouvement de rotation relative, **caractérisé en ce que** l'aimant (4) est magnétisé ou polarisé dans le sens radial de telle sorte que le pôle Nord et le pôle Sud (N, S) se trouvent l'un à côté de l'autre dans un plan (16) disposé perpendiculairement à une direction radiale rapportée à l'axe de rotation (6) et il se produit des lignes de champ magnétiques qui s'élargissent en forme d'éventail perpendiculairement au plan (16) à partir d'un centre (20) imaginaire se trouvant dans le plan (16).

2. Dispositif de mesure selon la revendication 1, **caractérisé en ce que** le premier corps (2) est un rotor et le deuxième corps (8) est un stator.

3. Dispositif de mesure selon la revendication 2, **caractérisé en ce que** l'aimant (4) est disposé sur un pourtour extérieur dans le sens radial du rotor (2).

4. Dispositif de mesure selon la revendication 3, **caractérisé en ce que** l'élément sensible aux champs magnétiques (10) est situé un peu plus loin vers l'extérieur dans le sens radial par rapport à la trajectoire circulaire (14) de l'aimant (4).

5. Dispositif de mesure selon au moins l'une des revendications précédentes, **caractérisé en ce que** l'aimant (4) est réalisé sous la forme d'un segment de cercle ou d'une partie d'un anneau circulaire.

6. Dispositif de mesure selon au moins l'une des revendications 1 à 4, **caractérisé en ce que** l'aimant (4) est de configuration rectangulaire.

7. Dispositif de mesure selon au moins l'une des revendications précédentes, **caractérisé en ce que** pendant le mouvement de rotation relative, il existe entre le premier corps (2) et le deuxième corps (8) des positions de rotation dans lesquelles l'élément sensible aux champs magnétiques (10) et l'aimant (4) se recouvrent au moins partiellement.

# FIG. 1

# FIG. 2

# FIG. 3

# FIG. 4

# FIG. 5

# FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19753776 A1

- EP 1182461 A2